(19) **Europäisches Patentamt**

**European Patent Office**

**Office européen des brevets**

(11) **EP 0 790 174 B1**

(12) **EUROPEAN PATENT SPECIFICATION**

(45) Date of publication and mention
of the grant of the patent:
**24.11.1999 Bulletin 1999/47**

(51) Int. Cl.$^6$: **B62M 23/02**

(21) Application number: **97102301.5**

(22) Date of filing: **13.02.1997**

(54) **Muscle-operated vehicle**

Mit Muskelkraft betreibares Fahrzeug

Véhicule propulsé par force musculaire

(84) Designated Contracting States:
**DE DK ES FR GB IT NL**

(30) Priority: **13.02.1996 JP 2568396**

(43) Date of publication of application:
**20.08.1997 Bulletin 1997/34**

(73) Proprietor:
**YAMAHA HATSUDOKı KABUSHIKı KAISHA
Iwata-shi Shizuoka-ken, 438 (JP)**

(72) Inventor:
**Nozomu, Takata,
c/o Yamaha Hatsudoki K. K.
Iwata-shi, Shizuoka-ken (JP)**

(74) Representative:
**Grünecker, Kinkeldey,
Stockmair & Schwanhäusser
Anwaltssozietät
Maximilianstrasse 58
80538 München (DE)**

(56) References cited:
**EP-A- 0 517 224          EP-A- 0 593 847**

• **PATENT ABSTRACTS OF JAPAN vol. 095, no.
005, 30 June 1995 & JP 07 033070 A (YAMAHA
MOTOR CO LTD), 3 February 1995,**

**Description**

This invention relates to a muscle-operated vehicle, in particular bicycle, provided with a human power drive system comprising a crankshaft, an auxiliary power unit comprising a battery powered electric motor, and with a control device for controlling the auxiliary power unit in accordance with the power applicable to the human power drive system and to a method of controlling an auxiliary power of a muscle-operated vehicle, in particular bicycle, provided with a human power drive system comprising a crankshaft, an auxiliary power unit comprising a battery powered electric motor for providing said auxiliary power, and with a control device controlling the auxiliary power unit in accordance with the power supplied to said human power drive system.

In recent years, motor-assisted bicycles are drawing public attention in which the pedal force applied on the pedals and assist power of an electric motor are combined and transmitted to the driving wheel. Such motor-assisted bicycles are constituted that the assist power is supplied according to the pedal force. That is to say, no assist power is provided unless the pedal force is applied. Therefore, when the rider is compelled to push and roll the bicycle uphill because the grade is so steep that the rider cannot ride and run uphill even if the assist power is provided, no assist power is provided, and the rider is required of a greater effort because of an additional weight of the bicycle.

To alleviate such an effort on the steep uphill, an arrangement has been proposed in which the vehicle is self-propelled at about a walking speed (Refer to Japanese Laid-open Patent Application Hei-4-358988). This is constituted that when the rider selects a very low speed mode by pushing a button or the like, an electric motor is rotated at a low speed, or an appropriate power is produced so as to alleviate the rider's effort described above.

However, since the motor is generally of a high speed type to obtain an optimum energy efficiency at high speeds, problems arise that, when the motor is used at very low speeds, energy efficiency lowers, the battery power is rapidly consumed, and the cruising range decreases. If a low speed type of motor is used which has a high efficiency at low speeds on the other hand, the motor rotation cannot catch up the ordinary running speed of the vehicle.

Here, it is conceivable, for improving efficiency in the low speed range with a high speed type of motor, to employ a bypass route of a high speed reduction ratio or an arrangement in which plural number of motors are connected in series and parallel and switched through relays. However, problems are that, in the case of the former, the speed reduction mechanism portion becomes heavy and its constitution is complicated, while in the case of the latter, the relays occupy a large space.

Also, with an arrangement for reducing the battery discharge rate in which main batteries are connected in series and parallel and switched according to the consumption amount, a problem is that an intermediate tap must be led out. Also, in the case of voltage stepping down with a DC-DC converter, problem is that a large electric current flows to shorten the life of brushes.

It is further conceivable to employ a separate, special driving source such as a special motor, compressed air, and resilient spring. In that case, there is an increase in cost because components of a low operation rate are added. Furthermore, method of limiting electric current is less positive and less advantageous.

It is therefore an objective of the present inventor to provide a muscle-operated vehicle as indicated above having an improved energy efficiency as well as an optimum supply of auxiliary power.

According to the invention, this objective is solved for a muscle-operated vehicle as indicated above in that said control device comprising motor characteristic control means for changing the operation characteristic of the electric motor in accordance with vehicle running conditions detected.

In an advantageous and preferred embodiment of the present invention, the output of the electric motor is controllable by the control device in accordance with the force or torque, respectively, applicable to the crankshaft and/or the rotational speed of said crankshaft.

According to another preferred embodiment of the present invention, an electric motor is a permanent magnet field type DC motor. In that case, it is advantageous when said control means is adapted to apply an electric current to commutating pole coils disposed around a permanent magnet in a direction to alter the magnetic field in accordance with the vehicle running conditions detected.

It is a further objective of the present invention to provide an improved method as indicated above which improves the energy efficiency as well as an optimum supply of auxiliary power.

According to the present invention, this objective is solved for a method as indicated above comprising the steps of detecting vehicle running conditions and controlling the operation characteristic of the electric motor in accordance with said detected vehicle running conditions.

According to a preferred embodiment of the present invention, said vehicle running conditions are the force or torque, respectively, applied to the crankshaft and/or the rotational speed of the crankshaft, because these conditions are easy to detect.

It is advantageous that the electric motor is a permanent magnet field type DC motor and the control means applies an electric current to commutating pole coils disposed around a permanent magnet in a direction to alter the magnetic field in accordance with the vehicle running conditions detected.

According to an advantageous and preferred embodiment of the present invention, the control device is provided with a map in which the operation range for the electric motor is divided according to the motor rotation speed and the output torque into a low speed high torque range, a low speed low torque range and a high speed low torque range, said control device determines and detects the actual operation range of the electric motor and controls the electrical current application in accordance with the detected results.

Other preferred embodiments of the present invention are laid down in further dependent claims.

In the following, the present invention is explained in greater detail with respect to several embodiments thereof in conjunction with the accompanying drawings, wherein:

FIG. 1 is a side view of a motor-assisted bicycle provided with a motor control device as an embodiment of the invention.
FIG. 2 shows a cross section of an electric motor of the bicycle.
FIG. 3 shows a constitution of a motor control device.
FIG. 4 is a characteristic diagram showing the relationship among the motor rotation speed, torque, and current.
FIG. 5 is a map diagram showing a motor operation range of the motor control device.

An embodiment of the invention will be hereinafter described in reference to the appended drawings.

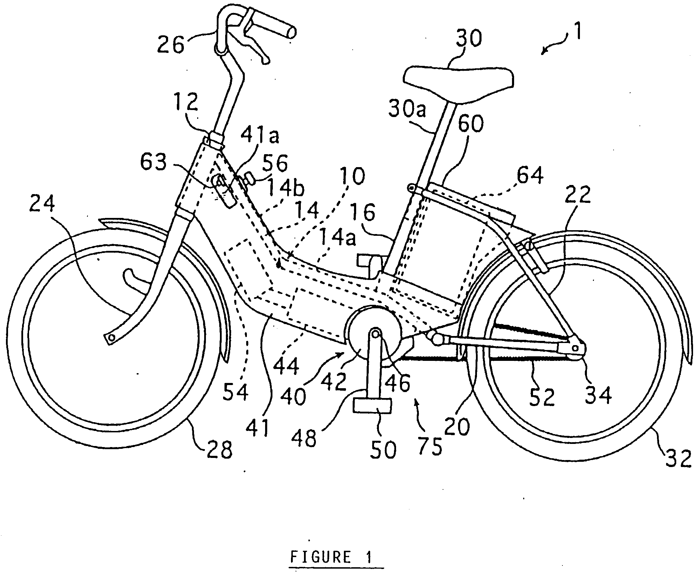

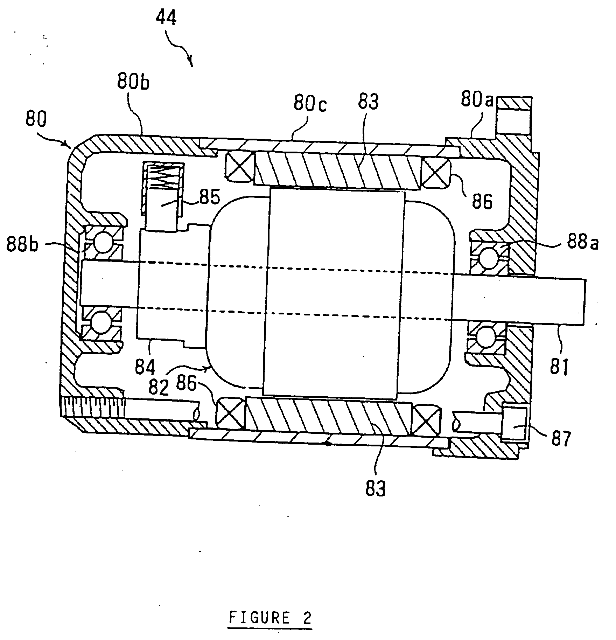

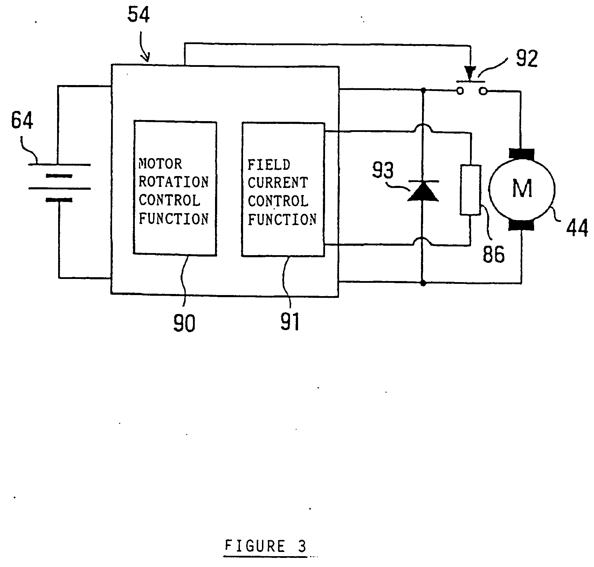

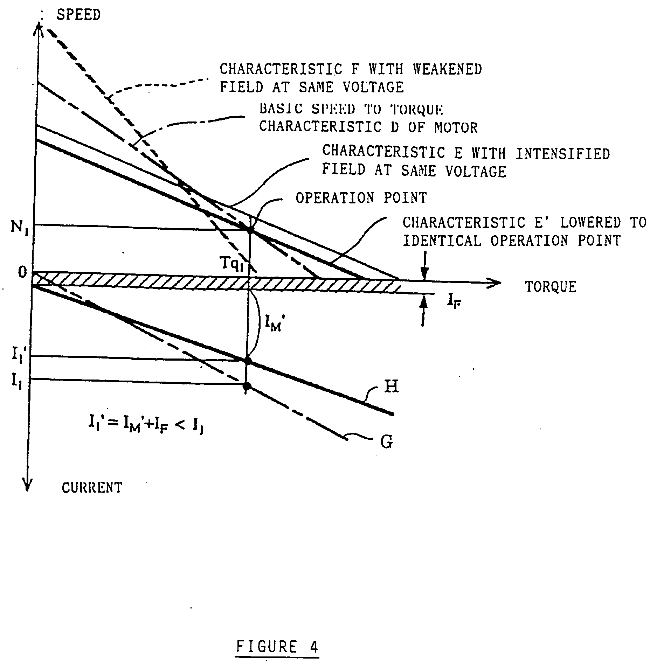

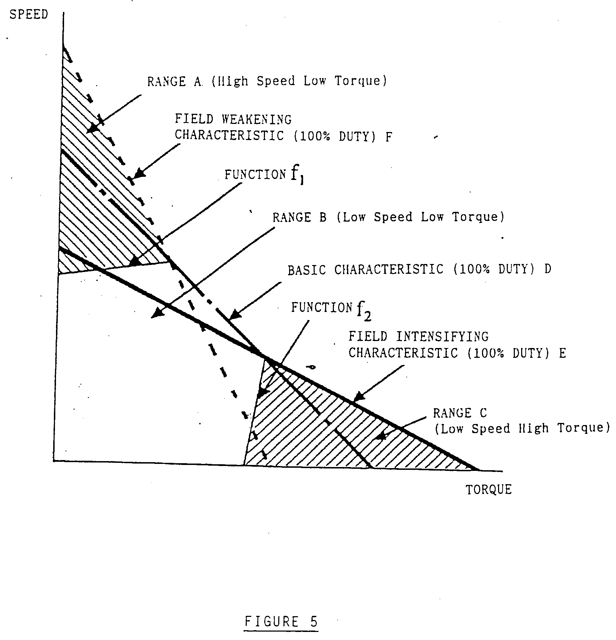

FIGs. 1 to 5 are for describing a motor drive device for a motor-assisted bicycle as an embodiment of the invention. FIG. 1 is a side view of the motor-assisted bicycle. FIG. 2 shows a cross section of an electric motor. FIG. 3 shows a constitution of a motor control device. FIG. 4 is a characteristic diagram for describing effect of decrease in necessary current. FIG. 5 is a characteristic diagram for describing operation ranges.

FIG. 1 shows a motor-assisted bicycle 1. A body frame 10 of the bicycle 1 comprises a head pipe 12, a down tube 14 extending from the head pipe 12 obliquely rear downward, a seat tube 16 rising from the rear part of the down tube 14, paired right and left rear arms 20 extending from the rear end of the down tube 14, and paired right and left seat stays 22 making connection between the rear ends of the rear arms 20 and the top end of the seat tube 16.

A front fork 24 is bearing-supported to be freely turned right and left on the head pipe 12. A front wheel is bearing-supported at the lower end of the front fork 24. A seat post 30a is inserted in the seat tube 16 so as to be adjustable in height. A saddle 30 is attached to the top end of the seat post 30a. A rear wheel 32 is rotatably disposed between the rear ends of the rear arms 20.

The symbol 40 denotes a power unit as the power source of the bicycle 1, comprising; a power case 42 housing a driving mechanism, and an electric motor 44 disposed in a vehicle body cover 41 so as to project obliquely up forward from the power case 42. The power case 42 is attached below the rear portion 14a of the down tube 14. The electric motor 44 lies parallel to the rear portion 14a of the down tube 14.

A battery 64 to be the power source for the power unit 40 comprises a large number of battery cells connected in series and housed in a case, and is removably housed in a battery case 60 disposed in the space between the seat tube 16 and the front edge of the rear wheel 32. By the way, the top end opening of the battery case 60 is located between and projects upward from the right and left seat stays 22 so that the battery 64 may be installed and removed in vertical directions.

A crankshaft 46 passes through the power case 42 in the vehicle width direction. Crank arms 48 (only one is shown) are attached to both ends of the crankshaft 46. Each of the crank arms 48 is provided with a crank pedal 50. Thus, a human power drive system 75 is constituted in which the pedal force applied to the crank pedals 50 is transmitted through a chain 52 to the rear wheel 32.

The pedal force applied to the crank pedals 50 is detected with a pedal force sensor disposed in the power case 42. The output of the electric motor 44 (assist power) is controlled with a controller 54 according to the pedal force and the rotation speed of the crankshaft. Thus, an electric power drive system is constituted in which an assist power commensurate with the pedal force is transmitted to the rear wheel 32.

By the way, the pedal force on the pedals 50 and the assist power of the electric motor 44 are combined within the power case 42 and the resultant force is transmitted through the chain 52 to the rear wheel 32. The controller 54 for controlling the output from the motor 44 is attached inside the vehicle body cover 41 so as to be located below the front portion 14b of the down tube 14.

A main switch 56 and a self-propelling switch 63 for selecting a very low speed running mode are disposed in the area where the vehicle body frame 10 is connected to the head pipe 12. The main switch 56 and the self-propelled run selecting switch 63 are disposed at an opening 41a made in the vehicle body cover 41 so as to be accessible from outside.

The electric motor 44, as shown in FIG. 2, is of a permanent magnet field type DC motor in which a core (rotor) 82 with an armature coil wound around an armature core is disposed in a housing 80, and a magnet 83 is disposed to surround the core 82.

The housing 80 is constituted with a cup-shaped front cap 80a, a rear cap 80b, a cylindrical yoke 80c, and a plural number of through bolts 87 which join the former three together. The rear end portion and the front end portion of the rotary shaft 81 of the core 82 are supported through a bearing 88b and a bearing 88a respectively with the rear cap 80b and the front cap 80a. By the way, a commutator 84 is attached to the rear portion of the rotary shaft 81. A brush 85 is provided for supplying electric current from the battery 64 to the core 82. The brush 85 is supported with a brush holder 85a and pushed with a spring 85b against the commutator 84.

The magnet 83 is disposed so that the N pole and the S pole are located by turns on the inside surface of the yoke 80c. Commutator coils 86 are disposed around the magnet 83 so as to produce magnetic field in the direction of intensifying or weakening the magnetic field produced with the core 82.

The controller 54 is constituted to calculate an assist power from a built-in map according to the pedal force and the crankshaft rotation speed and supply an electric current corresponding to the assist power. The controller 54 also has a motor rotation control function 90 as shown in FIG. 3 with which, when the self-propelled run mode is selected with the self-propelled run switch 63, the amount of electric power supplied to the electric motor 44 is controlled so that the motor rotation speed becomes a self-propelled run speed corresponding to the walking speed. In FIG. 3 are also shown, a switching element 92 for controlling the amount of electric power supplied to the electric motor 44, and a flywheel diode 93 for recirculating counterelectromotive force of the electric motor 44.

Furthermore, the controller 54 also functions as means for variably controlling the operation characteristic of the electric motor 44 by providing a field current control function 91 which supplies electric current to the commutator coils 86 to produce magnetic field in the direction of intensifying or weakening the magnetic field produced with the core 82.

With the fiedl current control function 91 described above, when the self-propelled run mode is selected with the self-propelled run switch 63, or when a very low speed running state is detected such as when the vehicle is being pushed to roll uphill as described above, electric current is supplied to the commutator coils 86 in the direction of intensifying the magnetic field. And when the motor rotation speed exceeds a specified high rotation speed, electric current is supplied to the commutator coils 86 in the direction of weakening the magnetic field.

The controller 54 of this embodiment is also provided with a map shown in FIG. 5 in which the operation range of the electric motor is divided according to the motor rotation speed and the output torque into a low speed high torque range C, a low speed low torque range B, and a high speed low torque range A. By the way, the functions f1 and f2 defining boundaries among those ranges may be appropriately set depending on the motor rotation speed and produced torque.

Which operation zone the electric motor 44 is in is determined and detected with the controller 54 and electric current application to the commutators 86 is controlled according to the detected result. That is to say, with the field current control function 91, when the operation range is determined as the low speed high torque range C, low speed low torque range B, or high speed low torque range A, field intensifying current application, no current application, or field weakening current application is carried out, respectively. By the way, switching among the current application controls is preferably provided with hysteresis by means of elapsed times and a plural number of functions.

Function and effects of the embodiment will be described below.

The electric motor 44 of the embodiment, when no current is applied, has a basic characteristic D shown with dash-and-dotted lines in FIGs. 4 and 5. When the field intensifying current application is made to the commutator coils 86, the characteristic changes to the field intensifying characteristic E shown with solid lines in the drawings. When the field weakening current application is made to the commutator coils 86, it changes to the field weakening characteristic F.

During a power-assisted run, the controller 54 determines an assist power commensurate with the pedal force and the crankshaft rotation speed, and an electric current is applied to the electric motor 44 so as to produce the determined assist power. In such a power-assisted run operation, which operation range the electric motor 44 is in is determined from the rotation speed and the output torque. When the motor operation state is in the low speed low torque operation range B shown in FIG. 5, no current is applied to the commutator coils 86, and the electric motor 44 is operated with the basic characteristic D. When in the low speed high torque operation range C, the field intensifying current application is made, and the electric motor 44 is operated with the field intensifying characteristic E. When in the high speed low torque operation range A, the field weakening current application is made, and the electric motor 44 is operated with the field weakening characteristic F. Alternatively, an armature current which is in proportion to the motor output torque may be used in place of the motor output torque.

When the motor rotation speed exceeds a specified value, the field weakening current application is made irrespective of the motor operation range, and the motor operation characteristic is made to the field weakening characteristic F of the high speed low torque type.

When the very low speed run mode is selected by the rider pressing the self-propelled run switch 63, the field intensifying current application is made irrespective of the motor operation range, and the motor operation characteristic is made to the field intensifying characteristic E of the low speed high torque type.

Thus, since the embodiment is arranged that when the self-propelled run switch 63 is pressed, electric current is supplied to the commutator coils 86 in the direction of intensifying the magnetic field to change the motor operation characteristic to the low speed high torque type, it is possible to alleviate the rider's effort in pushing and walking the vehicle on a steep uphill. At the same time, necessary current value is reduced to reduce consumed electric power of the battery, which leads to an extended cruising range.

Here, how the current value is reduced will be described in reference to FIG 4. In FIG. 4, the motor is assumed to be operating at the same operation point (Tq1, N1). Here, if the magnetic field is intensified without changing the voltage duty, the characteristic will shift as E. Therefore, the operation point is held to the same point by lowering the voltage duty. The symbol E' shows the field intensifying characteristic of this time. The symbol G denotes the torque-current characteristic with the basic characteristic D, and H denotes torque-current characteristic with the field intensifying characteristic E'. The characteristic H here is raised by an amount corresponding to a coil current IF. It proves that, with such an arrangement, armature current required for generating the same torque is smaller in comparison with that with the basic characteristic in a large torque range. For example, when compared at the operation point of FIG. 4, while the motor current =armature current=I1 with the basic characteristic, with the field intensifying characteristic, motor current=armature current IM'+coil current IF=I1' , which shows clearly that I1'<I1.

Since it is arranged that, when the motor rotation speed increases, electric current is applied to the commutator coils 86 in the direction of weakening the magnetic field to switch the motor operation characteristic to the high speed low torque type, in the high speed state, energy efficiency at the same rotation speed is increased and assist may be provided at a higher speed.

Furthermore, since which of the operation ranges of the high speed low torque range A, low speed low torque range B, and the low speed high torque range C the motor operation state is in is determined, and the field weakening current application is made to the commutator coils when in the high speed low torque range A, no current application is made when in the low speed low torque range B, and the field intensifying current application is made when in the low speed high torque range C, the motor efficiency is improved over the entire operation range, heat generation in the motor rotor and the battery run down are further reduced, which leads to a longer cruising range distance.

Also with this embodiment, since the motor operation characteristic is switched by intensifying and weakening the magnetic field by controlling electric current applied to the commutator coils 86 disposed around the permanent magnet 83, problems such as the increased weight, complicated structure, and increased cost described above seldom occur.

As described above, the motor control device for the motor operated vehicle of the invention is constituted to switch the motor operation characteristic according to the vehicle operation range. As a result, such effects are provided that, by switching the motor operation characteristic for example to the low speed high torque type in the low speed operation range, and to the high speed low torque type in the high speed range, the motor efficiency is improved over the entire operation range, and battery run down is restricted to extend the cruising range.

According to another embodiment of the invention, the motor operation characteristic is switched to the low speed high torque type in the very low speed run state. As a result, such effects are provided that the rider's effort is alleviated as when walking and pushing the vehicle on a steep uphill and battery run down is restricted to extend the cruising range.

According to a further embodiment of the invention, the motor operation characteristic is switched to the low speed high torque type by supplying electric current to the commutator coils disposed around the permanent magnet. As a result, an effect is provided that the motor efficiency is improved with a simple structure without causing problems such as increased vehicle weight, complicated structure, and increased cost.

According to a still further embodiment of the invention, it is possible that, when the motor rotation speed exceeds a specified high value, the motor operation range is switched to the high speed low torque type by supplying electric current to the commutator coils in the direction for weakening the magnetic field. As a result, such an effect is provided that a setting may be made so that efficiency in the high speed state at the same rotation speed is improved to improve the motor efficiency in the high speed range. At the same time, it is also possible to provide assist at a higher speed with the same motor.

In addition, it may be facilitated that, when the operation range is either in the low speed high torque range, low speed low torque range, or high speed low torque range, either the field intensifying current application, no current application, or field weakening current application is made to the commutator coils. As a result, such effects are provided that the motor is operated at a high efficiency over the entire operation range, heat generation in the motor core and the battery run down are restricted, so that the cruising range is further extended.

## Claims

1. Muscle-operated vehicle, in particular bicycle (1), provided with a human power drive system (75) comprising a crankshaft (46), an auxiliary power unit (40) comprising a battery powered electric motor (44), and with a control device (54) for controlling the auxiliary power unit (40) in accordance with the power applicable to the human power drive system (75), **characterized in that** said control device (54) comprising motor characteristic control means (90, 91) for changing the operation characteristic of the electric motor (44) in accordance with vehicle running conditions detected.

2. Muscle-operated vehicle according to claim 1, **characterized in that** the output of the electric motor (44) is controllable by the control device (54) in accordance with the force or torque, respectively, applicable to the crankshaft (46) and/or the rotational speed of said crankshaft (46).

3. Muscle-operated vehicle according to claim 1 or 2, **characterized in that** said control device (54) is attached inside a body cover (41).

4. Muscle-operated vehicle according to at least one of the preceding claims 1 to 3, **characterized by** a self-propelling switch (63) for selecting a very low speed running mode.

5. Muscle-operated vehicle according to at least one of the preceding claims 1 to 4, **characterized in that** said electric motor (44) is a permanent magnet field type DC motor and that the motor characteristic control means (90, 91) is adapted to apply an electric current to commutating pole coils (86) disposed around a permanent magnet (83) in a direction to alter the magnetic field in accordance with the vehicle running conditions detected.

6. Muscle-operated vehicle according to claim 5, **characterized in that** very low speed state detecting means is provided for detecting that the vehicle is in a very low speed running state and that the motor characteristic control means (90, 91) is constituted to switch the operation characteristic of the electric motor (44) to a low speed, high torque mode when the very low speed running state is detected.

7. Muscle-operated vehicle according to claim 5 or 6, **characterized in that** the motor characteristic control means (90, 91) is constituted to apply an electric current to the commutating coils (86) in the direction for weakening the magnetic field when rotation speed of the electric motor (44) exceeds a specified high value.

8. Muscle-operated vehicle according to at least one of the preceding claims 1 to 7, **characterized in that** the control device (54) is provided with operation range detecting means for discriminating and detecting whether the operation range is a low speed, high torque range (C), a low speed, low torque range (B), or a high speed, low torque range (A) and that the motor characteristic control means (90, 91) is constituted to apply an electric current for intensifying the magnetic field, to apply no current, or to apply an electric current to the commutating pole coils (86) disposed around the permanent magnet of the electric motor (44) in the case of the low speed high torque range (C), low speed low torque range (B), or high speed low torque range (A).

9. Muscle-operated vehicle according to at least one of the preceding claims 1 to 8, **characterized in that** the control device (54) is provided with a map in which the operation range for the electric motor (44) is divided according to the motor rotation speed and the output torque into a low speed high torque range (C), a low speed low torque range (B) and a high speed low torque range (A), said control device (54) is adapted to determine and to detect the actual operation range (A,B,C) of the electric motor (44) and to control the electrical current application in accordance with the detected results.

10. Method of controlling an auxiliary power of a muscle-operated vehicle, in particular bicycle (1), provided with a human power drive system (75) comprising a crankshaft (46), an auxiliary power unit (40) comprising a battery powered electric motor (44) for providing said auxiliary power, and with a control device (54) controlling the auxiliary power unit (40) in accordance with the power supplied to said human power drive system (75), **characterized by the steps of** detecting vehicle running conditions and controlling the operation characteristic of the electric motor (44) in accordance with said detected vehicle running conditions.

11. Method according to claim 10, **characterized in that** said vehicle running conditions are the force or torque, respectively, applied to the crankshaft (46) and/or the rotational speed of the crankshaft (46).

12. Method according to claim 10 or 11, **characterized in that** said electric motor (44) is a permanent magnet field type DC motor and that the motor characteristic control means (90, 91) applies an electric current to commutating pole coils (86) disposed around a permanent magnet (83) in a direction to alter the magnetic field in accordance with the vehicle running conditions detected.

13. Method according to claim 12, **characterized in that** very low speed state detecting means for detecting that the vehicle is in a very low speed running state and that the motor characteristic control means (90, 91) is constituted to switch the operation characteristic of the electric motor (44) to a low speed, high torque mode when the very low speed running state is detected.

14. Method according to claim 12 or 13, **characterized in that** the motor characteristic control means is constituted to apply an electric current to the commutating coils (86) in the direction for weakening the magnetic field when rotation speed of the motor exceeds a specified high value.

15. Method according to at least one of the preceding claims 10 to 14, **characterized in that** the control device is provided with operation range detecting means and discriminates and detects whether the operation range is a low speed, high torque range (C), a low speed, low torque range (B), or a high speed, low torque range (A) and that the motor characteristic control means (90, 91) applies an electric current for intensifying the magnetic field, applies no current, or applies an electric current to the commutating pole coils (86) disposed around the permanent magnet of the electric motor (44) in the case of the low speed high torque range (C), low speed low torque range (B), or high speed low torque range (A).

16. Method according to at least one of the preceding claims 10 to 15, **characterized in that** the control device (54) is provided with a map in which the operation range for the electric motor (44) is divided according to the motor rotation speed and the output torque into a low speed high torque range (C), a low speed low torque range (B) and a high speed low torque range (A), said control device (54) determines and detects the actual operation range (A,B,C) of the electric motor (44) and controls the electrical current application in accordance with the detected results.

**Patentansprüche**

1. Fahrzeug, das mit Muskelkraft betrieben ist, insbesondere Fahrrad (1), das mit einem durch eine Person angetriebenen Antriebssystem (75), das eine Kurbelwelle (46) aufweist, einer Hilfsenergieeinheit (40), die einen mittels Batterie betriebenen, elektrischen Motor (44) aufweist, und mit einer Steuervorrichtung (54) zum Steuern der Hilfsenergieeinheit (40) gemäß der Energie, die auf das durch die Person angetriebene Antriebssystem (75) aufbringbar ist, versehen ist, dadurch gekennzeichnet, daß die Steuervorrichtung (54) eine Motorcharakteristik-Steuereinrichtung (90, 91) zum Ändern der Betriebscharakteristik des elektrischen Motors (44) gemäß den Fahrzeuglaufzuständen, die erfaßt sind, aufweist.

2. Fahrzeug, das mit Muskelkraft betrieben ist, nach Anspruch 1, dadurch gekennzeichnet, daß der Abtrieb des elektrischen Motors (44) durch die Steuervorrichtung (54) gemäß der Kraft oder des Drehmoments jeweils, die auf die Kurbelwelle (46) aufbringbar sind, und/oder der Drehgeschwindigkeit der Kurbelwelle (46) steuerbar ist.

3. Fahrzeug, das mit Muskelkraft betrieben ist, nach Anspruch 1 oder 2, dadurch gekennzeichnet, daß die Steuervorrichtung (54) innerhalb einer Fahrzeugverkleidung (41) befestigt ist.

4. Fahrzeug, das mit Muskelkraft betrieben ist, nach mindestens einem der vorhergehenden Ansprüche 1 bis 3, gekennzeichnet durch einen Selbstantriebsschalter (63) zum Auswählen eines Laufmodus mit sehr niedriger Geschwindigkeit.

5. Fahrzeug, das mit Muskelkraft betrieben ist, nach mindestens einem der vorhergehenden Ansprüche 1 bis 4, dadurch gekennzeichnet, daß der elektrische Motor (44) ein DC-Motor eines Permanentmagnetfeldtyps ist und daß die Motorcharakteristik-Steuereinrichtung (90, 91) so angepaßt ist, um einen elektrischen Strom auf sich umpolende Polwicklungen (86) anzulegen, die um einen Permanentmagneten (63) herum angeordnet sind, in einer Richtung, um das magnetische Feld gemäß den Fahrzeuglaufzuständen, die erfaßt sind, zu ändern.

6. Fahrzeug, das mit Muskelkraft betrieben ist, nach Anspruch 5, dadurch gekennzeichnet, daß eine Erfassungseinrichtung für einen sehr niedrigen Geschwindigkeitszustand zum Erfassen vorgesehen ist, daß sich das Fahrzeug in einem sehr niedrigen Geschwindigkeitslaufzustand befindet, und daß die Motorcharakteristik-Steuereinrichtung (90, 91) so aufgebaut ist, um die Betriebscharakteristik des elektrischen Motors (44) zu einem Modus mit niedriger Geschwindigkeit, hohem Drehmoment dann umzuschalten, wenn der sehr niedrige Geschwindigkeitslaufzustand erfaßt ist.

7. Fahrzeug, das mit Muskelkraft betrieben ist, nach Anspruch 5 oder 6, dadurch gekennzeichnet, daß die Motorcharakteristik-Steuereinrichtung (90, 91) so aufgebaut ist, um einen elektrischen Strom an die sich umpolenden Spulen (86) in der Richtung zum Schwächen des magnetischen Felds dann anzulegen, wenn die Drehgeschwindigkeit des elektrischen Motors (44) einen spezifizierten, hohen Wert übersteigt.

8. Fahrzeug, das mit Muskelkraft betrieben ist, nach mindestens einem der vorhergehenden Ansprüche 1 bis 7, dadurch gekennzeichnet, daß die Steuervorrichtung (54) mit einer Betriebsbereichs-Effassungseinrichtung zum Diskriminieren und Erfassen vorgesehen ist, ob der Betriebsbereich ein Bereich (C) mit niedriger Geschwindigkeit, hohem Drehmoment, ein Bereich (B) mit niedriger Geschwindigkeit, niedrigem Drehmoment oder ein Bereich (A) mit hoher Geschwindigkeit, niedrigem Drehmoment ist, und daß die Motorcharakteristik-Steuereinrichtung (90, 91) so aufgebaut ist, um einen elektrischen Strom zum Intensivieren des magnetischen Felds anzulegen, um keinen Strom anzulegen, oder um einen elektrischen Strom an die sich umpolenden Polwicklungen (86) anzulegen, die um den Permanentmagneten des elektrischen Motors (44) herum angeordnet sind, in dem Fall des Bereichs (C) mit niedriger Geschwindigkeit, hohem Drehmoment, des Bereichs (B) mit niedriger Geschwindigkeit, niedrigem Drehmoment oder des Bereichs (A) mit hoher Geschwindigkeit, niedrigem Drehmoment.

9. Fahrzeug, das mit Muskelkraft betrieben ist, nach mindestens einem der vorhergehenden Ansprüche 1 bis 8, dadurch gekennzeichnet, daß die Steuervorrichtung (54) mit einer Liste versehen ist, in der der Betriebsbereich für den elektrischen Motor (44) gemäß der Motordrehgeschwindigkeit und dem Abtriebsdrehmoment in einen Bereich (C) mit niedriger Geschwindigkeit, hohem Drehmoment, einen Bereich (B) mit niedriger Geschwindigkeit, niedrigem Drehmoment und einen Bereich (A) mit hoher Geschwindigkeit, niedrigem Drehmoment unterteilt ist, wobei die Steuervorrichtung (54) dazu geeignet ist, den tatsächlichen Betriebsbereich (A, B, C) des elektrischen Motors (44) zu bestimmen und zu erfassen und die Anlegung des elektrischen Stroms gemäß den erfaßten Ergebnissen zu steuern.

10. Verfahren zum Steuern einer Hilfsenergie eines mit Muskelkraft betriebenen Fahrzeugs, insbesondere eines Fahrrads (1), das mit einem durch eine Person angetriebenen Antriebssystem (75), das eine Kurbelwelle (46) aufweist, einer Hilfsenergieeinheit (40), die einen mittels Batterie betriebenen, elektrischen Motor (44) zum Liefern der Hilfsenergie aufweist, und mit einer Steuervorrichtung (54), die die Hilfsenergieeinheit (40) gemäß der Energie steuert, die zu dem durch die Person angetriebenen Antriebssystem (75) zugeführt ist, versehen ist, gekennzeichnet durch die Schritte eines Erfassens von Fahrzeuglaufzuständen und eines Steuerns der Betriebscharakteristik des elektrischen Motors (44) gemäß den erfaßten Fahrzeuglaufzuständen.

11. Verfahren nach Anspruch 10, dadurch gekennzeichnet, daß die Fahrzeuglaufzustände die Kraft oder das Drehmoment, jeweils, angelegt an die Kurbelwelle (46), und/oder die Drehgeschwindigkeit der Kurbelwelle (46), sind.

12. Verfahren nach Anspruch 10 oder 11, dadurch gekennzeichnet, daß der elektrische Motor (44) ein DC-Motor vom Permanentmagnetfeldtyp ist und daß die Motorcharakteristik-Steuereinrichtung (90, 91) einen elektrischen Strom an die sich umpolenden Polwicklungen (86), die um einen Permanentmagneten (83) herum in einer Richtung angeordnet sind, anlegt, um das magnetische Feld gemäß den Fahrzeuglaufzuständen, die erfaßt sind, zu ändern.

13. Verfahren nach Anspruch 12, gekennzeichnet durch eine Erfassungseinrichtung für einen sehr niedrigen Geschwindigkeitszustand zum Erfassen, daß sich das Fahrzeug in einem sehr niedrigen Geschwindigkeitslaufzustand befindet, und daß die Motorcharakteristik-Steuereinrichtung (90, 91) so aufgebaut ist, um die Betriebscharakteristik des elektrischen Motors (44) auf einen Modus einer niedrigen Geschwindigkeit, hohen Drehmoments umzuschalten, wenn der sehr niedrige Geschwindigkeitslaufzustand erfaßt ist.

14. Verfahren nach Anspruch 12 oder 13, dadurch gekennzeichnet, daß die Motorcharakteristik-Steuereinrichtung so gebildet ist, um einen elektrischen Strom an die sich umpolenden Spulen (86) in der Richtung zum Schwächen des magnetischen Felds anzulegen, wenn die Drehgeschwindigkeit des Motors einen spezifizierten, hohen Wert übersteigt.

15. Verfahren nach mindestens einem der vorhergehenden Ansprüche 10 bis 14, dadurch gekennzeichnet, daß die Steuervorrichtung mit einer Betriebsbereichs-Erfassungseinrichtung versehen ist und diskriminiert und erfaßt, ob der Betriebsbereich ein Bereich (C) mit niedriger Geschwindigkeit, hohem Drehmoment, ein Bereich (B) mit niedriger Geschwindigkeit, niedrigem Drehmoment, oder ein Bereich (A) mit hoher Geschwindigkeit, niedrigem Drehmoment ist, und daß die Motorcharakteristik-Steuereinrichtung (90, 91) einen elektrischen Strom zum Intensivieren des magnetischen Felds anlegt, keinen Strom anlegt oder einen elektrischen Strom an die sich umpolenden Polspulen (86), die um den Permanentmagneten herum des elektrischen Motors (44) angeordnet sind, in dem Fall des Bereichs (C) mit niedriger Geschwindigkeit, hohem Drehmoment, des Bereichs (B) mit niedriger Geschwindigkeit, niedrigem Drehmoment oder des Bereichs (A) mit hoher Geschwindigkeit, niedrigem Drehmoment anlegt.

16. Verfahren nach mindestens einem der vorhergehenden Ansprüche 10 bis 15, dadurch gekennzeichnet, daß die Steuervorrichtung (54) mit einer Liste versehen ist, in der der Betriebsbereich für den elektrischen Motor (44) gemäß der Motordrehgeschwindigkeit und dem Abtriebsdrehmoment in einen Bereich (C) mit niedriger Geschwindigkeit, hohem Drehmoment, einen Bereich (B) mit niedriger Geschwindigkeit, niedrigem Drehmoment und einen Bereich (A) mit hoher Geschwindigkeit, niedrigem Drehmoment unterteilt ist, wobei die Steuervorrichtung (54) den tatsächlichen Betriebsbereich (A, B, C) des elektrischen Motors (44) bestimmt und erfaßt und das Anlegen des elektrischen Stroms gemäß den erfaßten Ergebnissen steuert.

## Revendications

1. Véhicule fonctionnant par force musculaire, en particulier bicyclette (1), équipé d'un système (75) d'entraînement au moyen d'énergie humaine comprenant un arbre (46) à manivelle, un ensemble (40) à énergie auxiliaire doté d'un moteur électrique alimenté en énergie par batterie, ainsi que d'un dispositif de commande (54) destiné à commander l'ensemble à énergie auxiliaire en fonction de l'énergie susceptible d'être appliquée au système (75) d'entraînement au moyen d'énergie humaine, caractérisé en ce que ledit dispositif de commande (54) comportant des moyens de commande (90, 91) de la caractéristique du moteur, destiné à faire varier la caractéristique de fonctionnement du moteur électrique (44) en fonction des conditions de marche du véhicule qui ont été détectées.

2. Véhicule fonctionnant par force musculaire selon la revendication 1, caractérisé en ce que l'énergie à la sortie du moteur électrique (44) peut être commandée par le dispositif de commande (54) en fonction de la force, ou respectivement du couple, qui peuvent être appliqués à l'arbre (46) à manivelle et/ou de la vitesse de rotation dudit arbre (46) à manivelle.

3. Véhicule fonctionnant par force musculaire selon la revendication 1 ou 2, caractérisé en ce que ledit dispositif de commande (54) est fixé à l'intérieur d'un carter (41).

4. Véhicule fonctionnant par force musculaire selon au moins l'une des revendications 1 à 3 qui précèdent, caractérisé en ce qu'il comporte un commutateur (63) à fonctionnement autonome destiné à sélectionner un mode de marche à très faible vitesse.

5. Véhicule fonctionnant par force musculaire selon au moins l'une des revendications 1 à 4 qui précèdent, caractérisé en ce que ledit moteur électrique (44) est un moteur à courant continu du type à champ magnétique permanent et en ce que le moyen (90, 91) de commande de la caractéristique du moteur est apte à appliquer un courant électrique pour commuter des bobines polaires (86) disposées autour d'un aimant permanent (83) dans le sens d'une modification du champ magnétique en fonction des conditions de marche du véhicule qui ont été détectées.

6. Véhicule fonctionnant par force musculaire selon la revendication 5, caractérisé en ce qu'un moyen de détection de vitesse très faible est installé en vue de détecter que le véhicule est dans un état de marche à vitesse très faible et en ce que le moyen (90, 91) de commande de la caractéristique du moteur est constitué de façon à faire passer la caractéristique de fonctionnement du moteur électrique (44) à un mode de vitesse faible et de fort couple lorsque l'état de marche à très faible vitesse est détecté.

7. Véhicule fonctionnant par force musculaire selon la revendication 5 ou 6, caractérisé en ce que le moyen (90, 91) de commande de la caractéristique du moteur est constitué de manière à appliquer un courant électrique aux bobines de commutation (86) dans le sens d'une réduction du champ magnétique lorsque la vitesse de rotation du moteur électrique (44) dépasse une valeur élevée donnée.

8. Véhicule fonctionnant par force musculaire selon au moins l'une des revendications 1 à 7 qui précèdent, caractérisé en ce que le dispositif de commande (54) est muni d'un moyen de détection de plage de fonctionnement destiné à déterminer et à détecter si la plage de fonctionnement est une plage (C) de vitesse faible et de fort couple, une plage (B) de vitesse faible, de faible couple, ou bien une plage (A) de vitesse élevée et de faible couple et en ce que le moyen (90, 91) de commande de la caractéristique du moteur est agencé de manière à appliquer un courant électrique destiné à intensifier le champ magnétique, à ne pas appliquer de courant, ou bien à appliquer un courant électrique aux bobines polaires (86) disposées autour de l'aimant permanent du moteur électrique (44) dans le cas de la plage (C) de vitesse faible et de fort couple, de la plage (B) de vitesse faible et de faible couple, ou de la plage (A) de vitesse élevée et de faible couple.

9.  Véhicule fonctionnant par force musculaire selon au moins l'une des revendications 1 à 8 qui précèdent, caractérisé en ce que le dispositif de commande (54) est muni d'une carte dans laquelle la plage de fonctionnement du moteur électrique (44) est divisée, en fonction de la vitesse de rotation du moteur et du couple de sortie, en une plage (C) de faible vitesse et de fort couple, une plage (B) de faible vitesse et de faible couple et une plage (A) de vitesse élevée et de faible couple, ledit dispositif de commande (54) étant apte à déterminer et à détecter la plage de fonctionnement (A, B, C) dans laquelle se trouve le moteur électrique et à commander l'application du courant électrique en fonction des résultats qui ont été détectés.

10. Procédé de commande d'une énergie auxiliaire d'un véhicule fonctionnant par force musculaire, en particulier une bicyclette (1), équipé d'un système d'entraînement (75) au moyen d'énergie humaine comprenant un arbre (46) à manivelle, un ensemble (40) d'énergie auxiliaire comprenant un moteur électrique (44) alimenté en énergie par batterie, destiné à fournir ladite énergie auxiliaire, ainsi qu'un dispositif de commande (54) commandant l'ensemble (40) d'énergie auxiliaire en fonction de l'énergie fournie audit système (75) d'entraînement au moyen d'énergie humaine, caractérisé par les étapes consistant à détecter les conditions de marche du véhicule et à commander la caractéristique de fonctionnement du moteur électrique (44) en fonction desdites conditions de marche du véhicule qui ont été détectées.

11. Procédé selon la revendication 10, caractérisé en ce que lesdites conditions de marche du véhicule sont la force, ou respectivement le couple, appliqués à l'arbre (46) à manivelle et/ou la vitesse de rotation de l'arbre (46) à manivelle.

12. Procédé selon la revendication 10 ou 11, caractérisé en ce que ledit moteur électrique (44) est un moteur à courant continu du type à aimant permanent et en ce que le moyen (90, 91) de commande de la caractéristique du moteur applique un courant électrique aux bobines polaires (86) de commutation disposées autour d'un aimant permanent (83) dans le sens d'une modification du champ magnétique en fonction des conditions de marche du véhicule qui ont été détectées.

13. Procédé selon la revendication 12, caractérisé en ce que le moyen de détection de l'état de très faible vitesse destiné à détecter que le véhicule est dans un état de marche à très faible vitesse et en ce que le moyen (90, 91) de commande de la caractéristique du moteur est agencé de manière à faire passer la caractéristique de fonctionnement du moteur électrique (44) à un mode de faible vitesse et de fort couple lorsque l'état de marche à très faible vitesse est détecté.

14. Procédé selon la revendication 12 ou 13, caractérisé en ce que le moyen de commande de la caractéristique du moteur est agencé de façon à appliquer un courant électrique aux bobines de commutation (86) dans le sens de l'affaiblissement du champ magnétique lorsque la vitesse de rotation du moteur dépasse une valeur élevée donnée.

15. Procédé selon au moins l'une des revendications 10 à 14 qui précèdent, caractérisé en ce que le dispositif de commande est doté d'un moyen de détection de plage de fonctionnement et qu'il détermine et détecte si la plage de fonctionnement est une plage (C) de faible vitesse et de fort couple, une plage (B) de faible vitesse et de faible couple ou bien une plage (A) de vitesse élevée et de faible couple, et en ce que le moyen (90, 91) de commande de la caractéristique du moteur applique un courant électrique en vue de renforcer le champ magnétique, n'applique pas de courant, ou bien applique un courant électrique aux bobines polaires (86) de commutation disposées autour de l'aimant permanent du moteur électrique (44) dans le cas d'une plage (C) de faible vitesse et de fort couple, d'une plage (B) de faible vitesse et de faible couple, ou bien d'une plage (A) de vitesse élevée et de faible couple.

16. Procédé selon au moins l'une des revendications 10 à 15 qui précèdent, caractérisé en ce que le dispositif de commande (54) est doté d'une carte dans laquelle la plage de fonctionnement du moteur électrique (44) est divisée, en fonction de la vitesse de rotation du moteur et du couple de sortie du moteur, en une place (C) de faible vitesse et de fort couple, une plage (B) de faible vitesse et de faible couple et une plage (A) de vitesse élevée et de faible couple, ledit dispositif de commande (54) déterminant et détectant la plage de fonctionnement (A, B, C) dans laquelle se trouve le moteur électrique (44) et commandant l'application de courant électrique en fonction des résultats détectés.

FIGURE 1

EP 0 790 174 B1

FIGURE 2

FIGURE 3

SPEED

CHARACTERISTIC F WITH WEAKENED
FIELD AT SAME VOLTAGE

BASIC SPEED TO TORQUE
CHARACTERISTIC D OF MOTOR

CHARACTERISTIC E WITH INTENSIFIED
FIELD AT SAME VOLTAGE

OPERATION POINT

CHARACTERISTIC E' LOWERED TO
IDENTICAL OPERATION POINT

$N_1$

0

$Tq_1$

TORQUE

$I_F$

$I_M'$

$I_1'$

$I_1$

H

G

$I_1' = I_M' + I_F < I_1$

CURRENT

FIGURE 4

14

SPEED

RANGE A (High Speed Low Torque)

FIELD WEAKENING
CHARACTERISTIC (100% DUTY) F

FUNCTION $f_1$

RANGE B (Low Speed Low Torque)

BASIC CHARACTERISTIC (100% DUTY) D

FUNCTION $f_2$

FIELD INTENSIFYING
CHARACTERISTIC (100% DUTY) E

RANGE C
(Low Speed High Torque)

TORQUE

FIGURE 5